# DEMANDE DE BREVET EUROPEEN

(11) **EP 3 882 480 A1**
(43) Date de publication de la demande: **22.09.2021**
(21) Numéro de dépôt: 21162752.6
(22) Date de dépôt: 16.03.2021
(51) Int. Cl.: F16D 13/75

(54) **ENSEMBLE DE TRANSMISSION DE COUPLE, EN PARTICULIER POUR VEHICULE AUTOMOBILE**

(30) Priorité: 19.03.2020 FR 2002702
(71) Demandeur: VALEO EMBRAYAGES, 80009 Amiens (FR)
(72) Inventeur: BOULET, Jérôme, 95892 CERGY PONTOISE (FR)
(74) Mandataire: Valeo Powertrain Systems

(57) **Abrégé**

L'invention concerne un ensemble de transmission de couple comprenant
- un rotor (1) de machine électrique comportant des cannelures (3),
- un embrayage (2) comportant des cannelures complémentaires (7),
- un élément de rattrapage de jeu (8),
- des moyens élastiques de rappel (14), et
- un élément de verrouillage (23).

## Description

La présente invention concerne un ensemble de transmission de couple, en particulier pour véhicule automobile, comprenant notamment un couplage en rotation d'un rotor de machine électrique à un embrayage.

L'invention concerne en particulier les ensembles de transmission pour un véhicule automobile de type hybride dans lequel une machine électrique tournante est disposée dans la chaine de traction.

Dans l'état de la technique, il est connu des ensembles de transmission, disposés entre la boîte de vitesses et le moteur thermique et comportant une machine électrique tournante et un embrayage de séparation côté moteur permettant d'accoupler en rotation le vilebrequin du moteur thermique au rotor de la machine électrique tournante. Ainsi, il est possible de couper le moteur thermique à chaque arrêt du véhicule et de le redémarrer grâce à la machine électrique tournante. La machine électrique tournante peut également constituer un frein électrique ou apporter un surplus d'énergie au moteur thermique pour l'assister ou éviter que celui-ci ne cale. La machine électrique tournante peut également assurer l'entraînement du véhicule. Lorsque le moteur tourne, la machine électrique tournante joue le rôle d'un alternateur. Un tel ensemble de transmission peut également lier la machine électrique tournante à la boite de vitesses par l'intermédiaire d'un double embrayage.

Un double embrayage permet de coupler alternativement l'arbre du moteur d'un véhicule, en général par l'intermédiaire d'un double volant amortisseur, avec deux arbres coaxiaux d'entrée d'une boîte de vitesses, dite boîte de vitesses robotisée.

Le double embrayage permet de changer de rapport de vitesses tout en maintenant la transmission d'un couple moteur aux roues du véhicule. En effet, il comprend habituellement deuxembrayages associés respectivement à des rapports de vitesses pairs et impairs. Lors d'un changement de rapport de vitesses, un premier embrayage est embrayé alors que le second embrayage est débrayé.

Lors de la connexion entre le rotor de la machine électrique et l'embrayage, tel qu'un embrayage de séparation ou un double embrayage, il est important d'assurer un transfert correct du couple tout en évitant les bruits de choc ou de cliquetis, notamment ceux dus aux vibrations de torsion, aux vibrations oscillantes et aux vibrations axiales des composants.

Dans le cas de la coupure du moteur thermique, lorsque l'énergie provient uniquement du rotor, le moindre bruit de choc peut être mal perçu par l'utilisateur car le bruit du moteur thermique ne couvre plus les « petits bruits ».

En outre, dans le cadre d'un ensemble de transmission comprenant un rotor de machine électrique, il est nécessaire de pouvoir amortir les chocs à différents endroits, en particulier entre l'entrée (moteur thermique) et la machine électrique d'une part et entre la machine électrique et les sorties d'autre part.

L'invention vise à proposer une solution de liaison entre un embrayage et un rotor de machine électrique permettant de transmettre le couple de la machine électrique parsimple emmanchement axial. Cette liaison permet aussi d'éviter l'apparition de nouveaux bruits sous l'effet des vibrations torsionnelles du moteur.

A cet effet, l'invention a pour objet un ensemble de transmission de couple, en particulier pour véhicule automobile, comprenant
- un rotor de machine électrique comportant des cannelures,
- un embrayage comportant un porte-disque et des cannelures complémentaires, les cannelures dudit rotor étant engagées avecjeu dans les cannelures complémentaires duditdouble embrayage,
- un élément de rattrapage de jeu monté déplaçable sur l'embrayage entre une première position dans laquelle il n'exerce aucune contrainte sur le rotor et une seconde position dans laquelle il contraint les cannelures du rotor contre les cannelures de l'embrayage,
- des moyens élastiques de rappel sollicitant l'élément de rattrapage de jeu vers sa seconde position, et
- un élément de verrouillage comportant des moyens de verrouillage mobiles entre une position de verrouillage, dans laquelle ils immobilisent l'élément de rattrapage de jeu dans sa première position, et une position de déverrouillage dans laquelle ils libèrent l'élément de rattrapage de jeu qui peut alors se déplacer vers sa seconde position, les moyens de verrouillage étant aptes à être déplacés vers leur position de déverrouillage par rotation relative du rotor par rapport à l'embrayage dans un cas d'entraînement du rotor par l'embrayage.

Grâce à l'utilisation d'un système d'effort de pré-charge par cannelure, composé de l'élément de rattrapage de jeu et des moyens élastiques de rappel, il est possible de réaliser une connexion entre le rotor et l'embrayage sans effort axial au montage. Cela permet également d'obtenir une absence de jeu angulaire en fonctionnement, au moins jusqu'à un couple de pré-charge en rétro de l'ordre de 50Nm, de façon à éliminer le risque de choc dans la connexion au ralenti du moteur thermique ou à l'inversion du couple moteur mais aussi lors du fonctionnement de la machine électrique en tant que tel ou en mode pendulaire.

Ce système d'effort de pré-charge par cannelure permet également de limiter les à-coups du moteur thermique sur le rotor, limiter la fatigue mécanique de celui-ci et limiter la bruyance en mode électrique.

Dans la description et les revendications, on utilisera les termes « avant » AV ou « arrière » AR selon la direction par rapport à une orientation axiale déterminée par l'axe X principal de rotation de la transmission du véhicule automobile « l'avant » désignant la partie située à gauche des figures, du côté du moteur, et « l'arrière » désignant la partie droite des figures, du côté de la transmission; les termes "externe" et "interne" ainsi que les orientations "axiale" et "radiale" pour désigner, selon les définitions données dans la description, des éléments de l'ensemble de la transmission de couple. Par convention, l'orientation "radiale" est dirigée orthogonalement à l'orientation axiale. L'orientation axiale se rapporte, suivant le contexte, à l'axe de rotation de l'ensemble de la transmission de couple. L'orientation "circonférentielle" est dirigée orthogonalement à la direction axiale et orthogonalement à la direction radiale. Les termes "externe" et "interne" sont utilisés pour définir la position relative d'un élément par rapport à un autre, par rapport à l'axe de référence, un élément proche de l'axe est ainsi qualifié d'interne par opposition à un élément externe situé radialement en périphérie.

De préférence l'embrayage est de type humide.

Selon un mode de réalisation, les cannelures dudit embrayage sont disposées directement sur le porte-disque de l'embrayage.

En variante, les cannelures dudit embrayage sont disposées sur une pièce de liaison solidaire en rotation du porte-disque. Cette pièce de liaison sert à transmettre le couple entre le rotor et l'embrayage.

De préférence, le rotor comporte des cannelures sur sa circonférence intérieure.

Avantageusement, l'élément de rattrapage de jeu comporte sur sa circonférence extérieure des dents aptes à venir en appui contre les cannelures du rotor dans la seconde position de l'élément de rattrapage de jeu ou en cas d'entrainement du rotor par l'embrayage.

Avantageusement, ledit embrayage est un double embrayage ou un embrayage de séparation apte à découpler ledit ensemble d'un moteur thermique. Lorsqu'il s'agit d'un double embrayage, l'embrayage est à double arbre.

De préférence, le porte-disque est un porte disque de sortie ou d'entrée. Lorsque les cannelures sont disposées directement sur le porte-disque, ces dernières sont sur un porte disque de sortie lorsque l'embrayage est un embrayage de séparation et sur un porte disque d'entrée lorsque l'embrayage est un double embrayage.

Avantageusement, l'élément de verrouillage est monté sur l'embrayage par l'intermédiaire d'au moins un rivet engagé dans une ouverture oblongue de l'élément de verrouillage, l'appui du rivet sur l'une des extrémités de ladite ouverture formant la butée permettant de limiter la rotation de l'élément de verrouillage dans le sens rétro.

Dans ce cas, ledit rivet sert également au montage de l'élément de rattrapage de jeu sur l'embrayage.

Avantageusement, l'élément de verrouillage est distinct de l'élément de rattrapage de jeu et mobile par rapport à celui-ci, les moyens élastiques de rappel étant montés entre l'élément de verrouillage et l'élément de rattrapage de jeu, le déverrouillage de l'élément de verrouillage étant obtenu par déplacement relatif entre l'élément de verrouillage et l'élément de rattrapage de jeu. L'élément de verrouillage étant un élément distinct des autres, il peut être conçu et dimensionné pour assurer spécifiquement la fonction de verrouillage et ainsi être plus résistant et plus fiable.

En outre, le montage des moyens élastiques de rappel entre l'élément de verrouillage et l'élément de rattrapage de jeu facilite leur bon positionnement et évite les phénomènes de flexion et de dégradation précités.

Avantageusement, l'élément de verrouillage comporte au moins une languette élastique dont l'extrémité libre est apte à venir en appui contre une butée de l'organe de rattrapage de jeu dans la position de verrouillage, ladite languette étant dégagée élastiquement de ladite butée dans la position de déverrouillage de manière à autoriser le déplacement de l'élément de rattrapage de jeu sous l'effet des moyens élastiques de rappel.

Avantageusement, l'élément de verrouillage et l'élément de rattrapage de jeu sont annulaires et comportent des moyens complémentaires permettant d'immobiliser axialement l'élément de verrouillage par rapport à l'élément de rattrapage de jeu tout en autorisant leur rotation relative. Ceci permet de pouvoir assembler un sous-ensemble formé au moins de l'élément de rattrapage de jeu et de l'élément de verrouillage, avant montage de ce sous-ensemble sur l'embrayage. Le montage de l'ensemble peut ainsi être simplifié ou facilité.

Selon une forme de réalisation de l'invention, l'élément de verrouillage, respectivement l'élément de rattrapage de jeu, comporte au moins une gorge dans laquelle est engagé un bord périphérique interne ou externe de l'élément de rattrapage de jeu, respectivement de l'élément de verrouillage. Dans ce cas, la gorge peut être délimitée par une paroi radiale de l'élément de verrouillage, respectivement par une paroi radiale de l'élément de rattrapage de jeu, et par une patte.

Selon une autre forme de réalisation de l'invention, l'élément de verrouillage comporte une surface de came apte à coopérer avec une surface de came complémentaire de l'embrayage, l'élément de verrouillage comportant une butée apte à venir en appui sur une surface d'appui de l'élément de rattrapage de jeu dans sa position verrouillée et apte à être décalée de ladite surface d'appui dans sa position déverrouillée, l'élément de verrouillage étant apte à passer de sa position verrouillée à sa position déverrouillée par coopération desdites surfaces de cames.

L'élément de verrouillage peut comporter une zone d'appui destinée à veniren appui contre l'embrayage après déverrouillage.

En outre, les surfaces de came de l'élément de verrouillage et de l'élément de rattrapage de jeu peuvent être conçues pour décaler axialement la butée de l'élément de verrouillage par rapport à la surface d'appui correspondante de l'élément de rattrapage de jeu, de façon à déverrouiller l'élément de verrouillage.

En variante, l'élément de verrouillage peut être monté basculant par rapport à l'élément de rattrapage de jeu, entre une position verrouillée et une position déverrouillée, les surfaces de came desdits éléments étant aptes à entraîner le basculement de l'élément de verrouillage vers sa position de déverrouillage.

Dans ce cas, l'élément de verrouillage peut comporter un trou oblong dans lequel est monté un plot de l'élément de rattrapage de jeu.

L'invention a également pourobjet, un système d'effort de pré-charge apte à venir en appui contre les cannelures d'un rotor, ledit système étant solidaire d'un embrayage comportant un porte-disque et des cannelures complémentaires, les cannelures dudit rotor étant engagées avec jeu dans les cannelures complémentaires dudit embrayage, ledit système comprenant :
- un élément de rattrapage de jeu monté déplaçable sur l'embrayage entre une première position dans laquelle il n'exerce aucune contrainte sur le rotor et une seconde position dans laquelle il contraint les cannelures du rotor contre les cannelures de l'embrayage,
- des moyens élastiques de rappel sollicitant l'élément de rattrapage de jeu vers sa seconde position, et
- un élément de verrouillage comportant des moyens de verrouillage mobiles entre une position de verrouillage, dans laquelle ils immobilisent l'élément de rattrapage de jeu dans sa première position, et une position de déverrouillage dans laquelle ils libèrent l'élément de rattrapage de jeu qui peut alors se déplacer vers sa seconde position, les moyens de verrouillage étant aptes à être déplacés vers leur position de déverrouillage par rotation relative du rotor par rapport à l'embrayage dans un cas d'entraînement du rotor par l'embrayage,
l'élément de rattrapage de jeu comportant sur sa circonférence extérieure des dents aptes à venir en appui contre les cannelures du rotor dans la seconde position de l'élément de rattrapage de jeu ou en cas d'entrainement du rotor par l'embrayage.

L'invention concerne également un procédé de montage d'un ensemble du type précité, comportant les étapes suivantes :
- monter l'élément de rattrapage de jeu sur l'embrayage,
- monter l'élément de verrouillage sur l'embrayage,
- positionner l'élément de verrouillage par rapport à l'élément de rattrapage de jeu de façon à pouvoir engager les moyens élastiques de rappel entre lesdits éléments,
- monter les moyens élastiques de rappel entre l'élément de verrouillage et l'élément de rattrapage de jeu,
- positionner l'élément de verrouillage par rapport à l'élément de rattrapage de jeu de façon à pouvoir verrouiller l'élément de verrouillage, en contraignant les moyens élastiques de rappel,
- verrouiller l'élément de verrouillage.

Les étapes précitées ne sont pas nécessairement successives. C'est ainsi notamment que l'élément de verrouillage peut être monté sur l'embrayage avant l'élément de rattrapage de jeu.

L'invention concerne également un autre procédé de montage d'un ensemble du type précité, comportant les étapes suivantes:
- assembler l'élément de verrouillage et l'élément de rattrapage de jeu à l'aide des moyens complémentaires permettant d'immobiliser axialement l'élément de verrouillage par rapport à l'élément de rattrapage de jeu tout en autorisant leur rotation relative,
- positionner l'élément de verrouillage par rapport à l'élément de rattrapage de jeu de façon à pouvoir engager les moyens élastiques de rappel entre lesdits éléments,
- monter les moyens élastiques de rappel entre l'élément de verrouillage et l'élément de rattrapage de jeu,
- monter le sous-ensemble formé précédemment sur l'embrayage,
- positionner l'élément de verrouillage par rapport à l'élément de rattrapage de jeu de façon à pouvoir verrouiller l'élément de verrouillage, en contraignant les moyens élastiques de rappel,
- verrouiller l'élément de verrouillage.

Comme précédemment, les étapes précitées ne sont pas nécessairement successives. C'est ainsi notamment que les moyens élastiques peuvent être montés entre l'élément de verrouillage et l'élément de rattrapage de jeu, après que le sous-ensemble formé par assemblage de ces deux éléments a été monté sur l'embrayage.

Enfin, l'élément de verrouillage peut être verrouillé en positionnant l'extrémité libre de la languette élastique en appui contre la butée correspondante de l'organe de rattrapage de jeu, à l'encontre de la force de rappel élastiquede la languette, cette position de verrouillage de la languette élastique étant maintenue par la contrainte exercée par les moyens élastiques de rappel.

L'invention sera mieux comprise à la lecture de la description qui suit et à l'examen des figures qui l'accompagnent. Ces figures ne sont données qu'à titre illustratif mais nullement limitatif de l'invention.
[Fig. 1] représente une vue en perspective d'un ensemble selon une première forme de réalisation de la présente invention.
[Fig. 2] représente une vue en perspective partielle de certaines pièces de la figure 1.
[Fig. 3] représente une vue depuis l'arrière de l'élément de rattrapage, de verrouillage et des moyens élastiques de rappel de la première forme de réalisation.
[Fig. 4] représente une vue depuis l'avant de la figure 3.
[Fig. 5] représente une vue en détail et en coupe montrant une première position de l'élément de verrouillage et de l'élément de rattrapage de jeu, par rapport à la pièce de liaison et par rapport à un rivet de montage formant une butée.
[Fig. 6] représente une vue en détail et en coupe montrant une deuxième position.
[Fig. 7] représente une vue en perspective d'un ensemble selon une deuxième forme de réalisation de la présente invention.

Les éléments identiques, similaires ou analogues conservent la même référence d'une figure à l'autre.

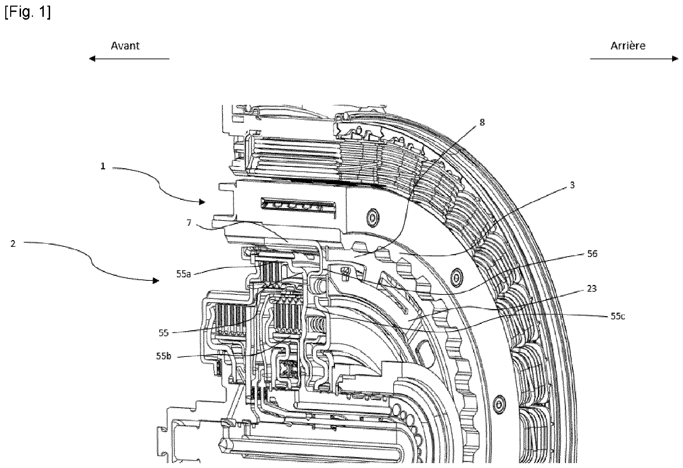

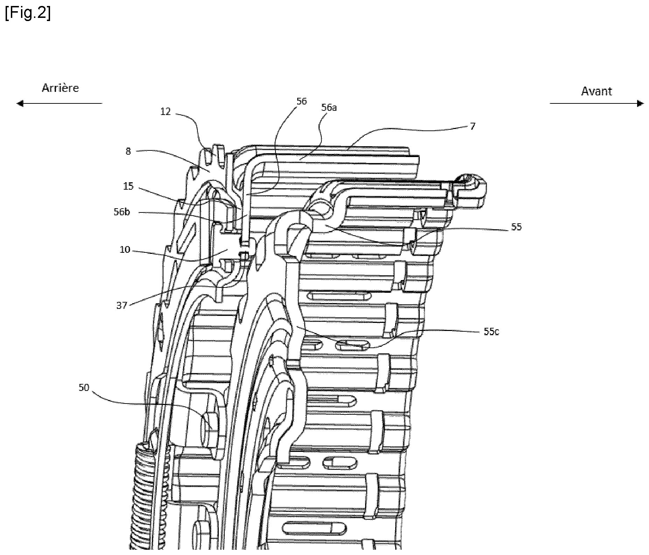

L'invention sera mieux comprise et d'autres détails, caractéristiques et avantages de l'invention apparaîtront à la lecture de la description suivante faite à titre d'exemple non limitatif en référence auxdessins annexés dans lesquels :
Une première forme de réalisation d'un ensemble de transmission de couple est illustrée aux figures 1 et 2. Cet ensemble comprend une machine électrique comprenant un stator et un rotor 1 ainsi qu'un embrayage 2, en l'occurrence un double embrayage. Le rotor 1 n'est représenté qu'à la figure 1. Il n'est pas représenté sur les autres figures. Le rotor 1 comporte des cannelures 3 à sa périphérie radialement interne.
Le double embrayage 2 comporte un porte-disque d'entrée 55 commun aux deux embrayages du double embrayage 2. Ce porte-disque 55 se compose à son extrémité radialement externe d'un support de disques extérieur 55a, à son extrémité radialement interne d'un support de disque intérieur55b et d'une flasque 55c reliant les deux supports. Le double embrayage 2 comporte également des cannelures complémentaires 7 à sa périphérie radialement externe coopérant avec les cannelures 3 du rotor 1. En particulier, les cannelures 3 et 7 sont montées avec jeu les unes dans les autres.

Un tel jeu est nécessaire pour faciliter le montage du double embrayage 2 sur le rotor 1, ce montage pouvant notamment être effectué « en aveugle ». Le jeu autorise une rotation relative du rotor par rapport au double embrayage 2.

Dans l'exemple considéré, les cannelures 7 du double embrayage 2 ne sont pas disposées directement sur le porte-disque 55 mais sont disposées sur une pièce de liaison 56 solidaire en rotation du porte-disque d'entrée 55, en particulier de la flasque 55c, à l'aide de rivets 50 par exemple.

La pièce de liaison 56 est constituée d'une extension axiale 56a et d'une paroi annulaire radiale 56b. Les cannelures 7 sont situées sur l'extension axiale 56a et les rivets 50 qui solidarisent la pièce de liaison 56 au porte-disque d'entrée 55 sont situés sur la paroi annulaire radiale 56b.

La pièce de liaison 56 permet le passage du couple vers et depuis le rotor en direction du double embrayage 2 via le porte disque 55.

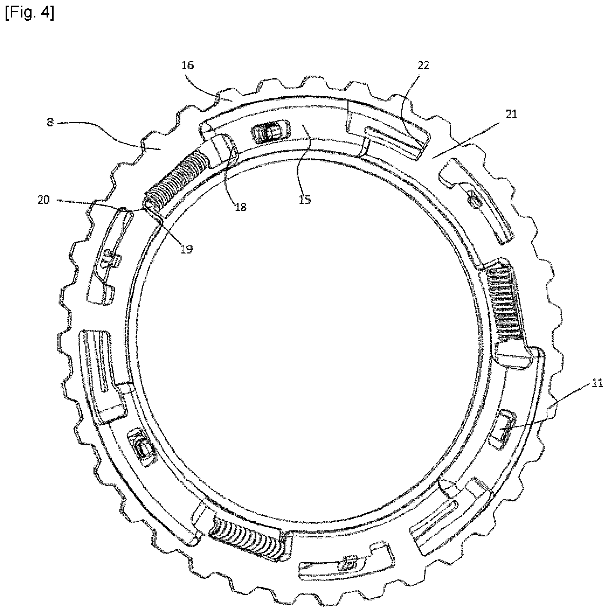

Un élément annulaire de rattrapage de jeu 8 est monté sur la face arrière du double embrayage 2, par l'intermédiaire de rivets 10 montés dans des ouvertures oblongues 11 de l'élément de rattrapage de jeu 8. Sur la figure 4, un rivet 10 a été enlevé afin de laisser apparaitre le trou oblong 11 correspondant. Plus particulièrement, les ouvertures oblongues 11, en forme d'arc de cercle, autorisent un débattement angulaire P1 de l'élément de rattrapage de jeu 8 par rapport au double embrayage 2, d'une valeur comprise entre 2 et 3°, préférentiellement de l'ordre de 3°.

La périphérie radialement externe de l'élément de rattrapage de jeu 8 comporte des dents 12 de formes similaires à celles des cannelures 7 de la pièce de liaison 2.

Les dents 12 sont également décalées des cannelures 7, par exemple d'un angle de 2°.

Le débattement angulaire entre le rotor 1 et le double embrayage 2 est supérieur au débattement angulaire entre l'élément de rattrapage de jeu 8 et le double embrayage 2.

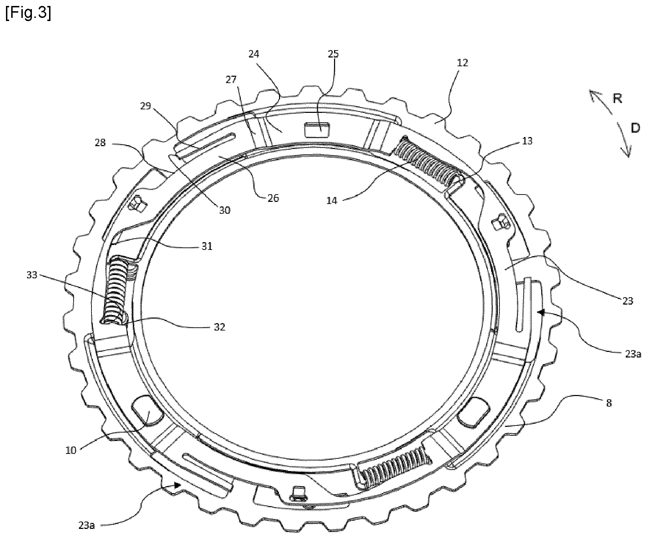

L'élément de rattrapage de jeu 8 comporte en outre des fenêtres 13 (voir figure 3) servant au logement de moyens élastiques de rappel 14, tels que des ressorts.

Plus particulièrement, comme cela est mieux visible à la figure 4, l'élément de rattrapage de jeu 8 comporte des premières zones 15 globalement planes et s'étendant radialement, plaquées axialement en appui contre la paroi annulaire radiale 56b de la pièce de liaison 56, et des secondes zones 16 s'étendant également radialement décalées axialement vers l'arrière par rapport aux première zones 15.

Chaque fenêtre 13 est située à cheval sur une première et une seconde zone 15, 16. Plus particulièrement, chaque fenêtre 13 comporte une première extrémité 18 formée au niveau d'une première zone 15, et une seconde extrémité 19 formée au niveau d'une seconde zone 16. La seconde extrémité 19 de chaque fenêtre 13 comporte un plot de centrage 20 apte à être engagé dans une extrémité d'un ressort hélicoïdal 14.

L'élément de rattrapage de jeu 8 comporte en outre des butées 21 s'étendant radialement depuis une première zone 15 intérieure vers deuxième première zone 15 extérieure 15. Chaque butée 21 comprend une surface de butée 22 radiale.

L'ensemble de transmission comprend également un élément de verrouillage annulaire 23 mieux visible sur la figure 3 monté sur la face arrière de l'élément de rattrapage de jeu 8. L'élément de verrouillage comporte des premières zones 24 planes et radiales, situées en regard des premières zones 15 de l'élément de rattrapage de jeu 8. Les premières zones 24 comportent des ouvertures oblongues 25, en forme d'arc de cercle, autorisant un débattement angulaire P2 de l'élément de verrouillage 23 par rapport au double embrayage 2, en particulier à la pièce de liaison 56, d'une valeur comprise entre 1 et 2°, préférentiellement de l'ordre de 2 °. On notera que le débattementangulaire P2 de l'élément de verrouillage 23 est inférieur au débattement angulaire P1 de l'élément de rattrapage de jeu 8.

L'élément de verrouillage 23 comporte en outre des secondes zones 26 radiales décalées axialement vers l'arrière par rapport aux premières zones 24. Les zones 24 et 26 sont reliées par des zones courbes 27. L'élément de verrouillage 23 comprend au niveau des zones 26 des moyens de verrouillage 23a.

Les secondes zones 26 comportent des découpes 28 au niveau de leur bord périphérique externe, dans lesquelles sont formées des languettes 29 élastiques s'étendant circonférentiellement. Les extrémités libres 30 des languettes 29 sont destinées à coopérer avec les faces de butée 22 de l'élément de rattrapage de jeu 8. Dans leur position de repos, les extrémités libres 30 des languettes 29 sont décalées axialement vers l'arrière par rapport aux faces de butée 22. Cependant, les languettes 29 peuvent être contraintes de façon à ce que leurs extrémités libres 30 soient en appui sur lesdites faces de butée 22.

D'autres découpes 31 sont formées au niveau du bord périphérique interne des secondes zones 26 de l'élément de verrouillage 23, chaque découpe 31 définissant une face radiale 32 à partir de laquelle s'étend un plot de centrage 33.

L'élément de verrouillage 23 et l'élément de rattrapage de jeu 8 sont en contact au niveau des fenêtres 13 et des découpes 31, afin d'assurer l'alignement des moyens de centrage des ressorts 14.

Les ressorts hélicoïdaux de compression 14 sont montés entre l'élément de rattrapage de jeu 8 et l'élément de verrouillage 23. Plus particulièrement, chaque ressort 14 comporte une première extrémité engagée sur un plot de centrage 20 de l'élément de rattrapage de jeu 8 et prenant appui sur la seconde extrémité 19 de la fenêtre 13 correspondante et une seconde extrémité engagée sur un plot de centrage 33 de l'élément de verrouillage 23 et prenant appui sur la face radiale 32 correspondante.

La flexion du ressort 14 est limitée radialement vers l'extérieur, par un bord de la découpe 31 s'étendant circonférentiellement.

Les rivets 10 sont fixés dans des trous 37 (figure 2) de la pièce de liaison 56 et sont engagés dans les ouvertures oblongues 11, 25 de l'élément de rattrapage de jeu 8 et de l'élément de verrouillage 23, situées en regard les uns des autres.

Lesdits éléments 8,23 et la pièce de liaison 56 sont ainsi plaqués axialement les uns contre les autres mais sont libres de pivoter dans la limite des débattements précités.

La pièce de liaison 56, l'élément de rattrapage de jeu 8 et l'élément de verrouillage 23 peuvent être formés par découpage et emboutissage de tôles.

Un exemple de procédé de montage d'un tel ensemble de transmission de couple va maintenant être décrit.

Lors d'un tel montage, on positionne tout d'abord la pièce de liaison 56 sur l'embrayage 2, puis on place l'élément de rattrapage de jeu 8 sur la paroi annulaire radiale 56b, en positionnant les ouvertures 11 de l'élément de rattrapage de jeu 8 en regard des trous 37 de la plaque de liaison 2. On place ensuite l'élément de verrouillage 23 sur la face arrière de l'élément de rattrapage de jeu 8 de façon à pouvoir monter les ressorts de rappel 14. On monte les ressorts de rappel 14 entre l'élément de rattrapage de jeu 8 et l'élément de verrouillage 23, en engageant les extrémités des ressorts 14 dans les plots de centrage 20, 33 correspondants. L'élément de verrouillage 23 est ensuite pivoté par rapport à l'élément de rattrapage de jeu 8 à l'encontre de l'effort de rappel exercé par les ressorts 14, jusqu'à ce que les extrémités libres 30 des languettes 29 soient situées au droit des faces 22 des butées 21 correspondantes. Dans cette position, les extrémités libres 30 des languettes 29 sont encore écartées axialement des faces de butée22 (position de déverrouillage), comme cela est visible à la figure 3. Les languettes 29 peuvent ensuite être déformées élastiquement, de façon à amener les extrémités libres 30 au contact des faces de butée 22. Sous l'action des ressorts 14, les languettes 29 sont ainsi coincées dans leur position de verrouillage dans laquelle elles coopèrent avec les butées 21. Dans cette position, les languettes 29 immobilisent l'élément de rattrapage de jeu 8 par rapport à l'élément de verrouillage 23. Enfin, les rivets 10 sont montés dans les trous 37 et dans les ouvertures 11, 25 de manière à maintenir l'élément de rattrapage de jeu 8 et l'élément de verrouillage 23 sur la plaque de liaison 2.

Le fonctionnement de cet ensemble de transmission va maintenant être décrit.

En fonctionnement, la transmission du couple peut s'effectuer dans deux sens de rotation opposés, respectivement dans un sens direct (flèche D), correspondant au sens d'entraînement de l'embrayage2 par le rotor 1, et dans un sens de rotation opposé, dit sens rétro (flèche R).

La rotation de l'embrayage 2 et du rotor 1 dans le sens rétro R peut notamment se produire lorsque la boîte de vitesses est au point mort ou que l'embrayage est en position débrayée et que le moteur exerce un couple de freinage, appelé frein moteur. Par exemple dans le cas de l'utilisation de la machine électrique et donc du rotor 1 en mode pendulaire, la machine électrique comprenant le rotor 1 fonctionnera par à-coup avec une variation des impulsions (accélération de la rotation par impulsion). Le moment entre deux impulsions provoquera un mode dit rétro (réduction de la vitesse de rotation).

Initialement, c'est-à-dire après montage avec jeu des cannelures 3 du rotor 1 dans les cannelures 7 de l'embrayage 2, l'élément de rattrapage de jeu 8 est en position inactive : il n'applique aucun effort sur les cannelures 3, 7 desdits éléments 1, 2.

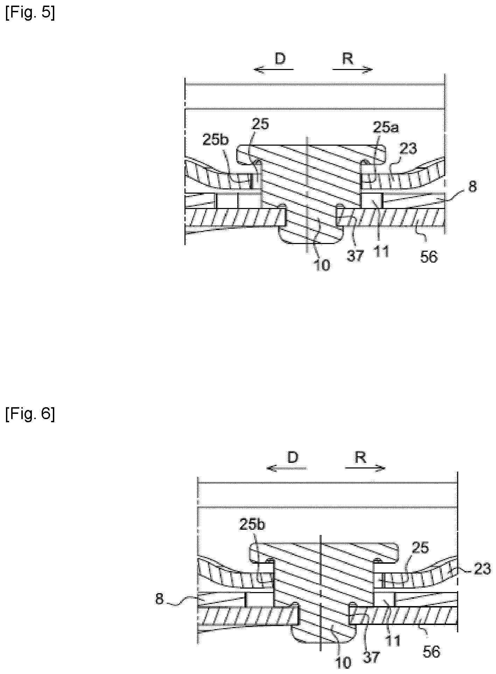

Dans cette position inactive, les extrémités libres 30 des languettes 29 de l'élément de verrouillage 23 sont maintenues en appui sur les faces 22 des butées 21 de l'élément de rattrapage de jeu 8 par les ressorts de rappel 14. L'élément de verrouillage 23 est donc en position verrouillée et l'élément de verrouillage 23 ne peut pas pivoter par rapport à l'élément de rattrapage de jeu 8. Les rivets 10 sont en appui sur des premières extrémités 25a des ouvertures oblongues 25 de l'élément de verrouillage 23 (figure 5). Le contact au niveau des extrémités 25a est utile pour minimiser l'ouverture de la denture entre les éléments 23 et 56, dans le but de faciliter la pénétration de la denture 3 du rotor 1. Un tel contact n'est toutefois pas obligatoire.

Si la transmission fonctionne dans le sens direct D, les cannelures 3 de du rotor 1 viennent en appui contre celles 7 de l'embrayage 2, le rotor 1 entraînant ainsi en rotation l'embrayage 2.

Dès que la transmission fonctionne dans un sens rétro R, l'embrayage 2 pivote par rapport au rotor 1, du fait du jeu entre les cannelures 3, 7 desdits éléments 1, 2.

Lors de ce pivotement (sur un angle limité), les cannelures 3 du rotor 1 prennent appui sur les dents 12 de l'élément de rattrapage de jeu 8, qui pivote alors dans le sens rétro R par rapport à l'embrayage 2. L'élément de rattrapage de jeu 8 entraîne avec lui l'élément de verrouillage 23, dans le sens rétro R, par l'intermédiaire des ressorts de rappel 14 qui sont déjà sous contrainte, c'est-à-dire compressés.

Lors de ce pivotement, l'élément de verrouillage 23 vient en butée contre les rivets 10, au niveau des secondes extrémités 25b des ouvertures oblongues 25 (figure 6). A partir de cet instant, l'élément de verrouillage 23 est immobilisé en rotation par rapport à l'embrayage 2 mais l'élément de rattrapage de jeu 8 (qui continue d'être entrainé en rotation dans le sens rétro R par les cannelures 3 du rotor 1) poursuit sa rotation par rapport à l'embrayage 2. En d'autres termes, l'élément de rattrapage de jeu 8 pivote dans le sens rétro R par rapport à l'élément de verrouillage 23. Ceci provoque le dégagement des extrémités libres 30 des languettes 29 par rapport aux faces de butée 22, les languettes 29 retrouvant ainsi leur position de repos dans laquelle lesdites extrémités libres 30 sont décalées axialement des faces de butée 22 correspondantes : l'élément de verrouillage 23 est déverrouillé. Dès lors, sous l'action des ressorts de rappel 14, l'élément de rattrapage de jeu 8 peut pivoter librement dans le sens direct D par rapport à l'embrayage 2. Les dents 12 de l'élément de rattrapage de jeu 8 sont alors contraintes en appui contre les cannelures 3 du rotor 1 de manière à rattraper le jeu formé entre l'embrayage 2 et le rotor 1 : l'élément de rattrapage de jeu 8 est dans sa position active.

Lors des rotations suivantes dans le sens direct D ou rétro R, l'élément de rattrapage de jeu 8 reste en position active, sous l'action des ressorts de rappel 14. En effet, sauf réarmement volontaire, les languettes 29 ne peuvent pas retrouver leur position verrouillée car leur position de repos est la position déverrouillée.

Le jeu entre le rotor 1 et l'embrayage 2 est ainsi réduit ou annulé, ce qui permet de réduire le bruit et l'usure de ces éléments 1, 2 en fonctionnement.

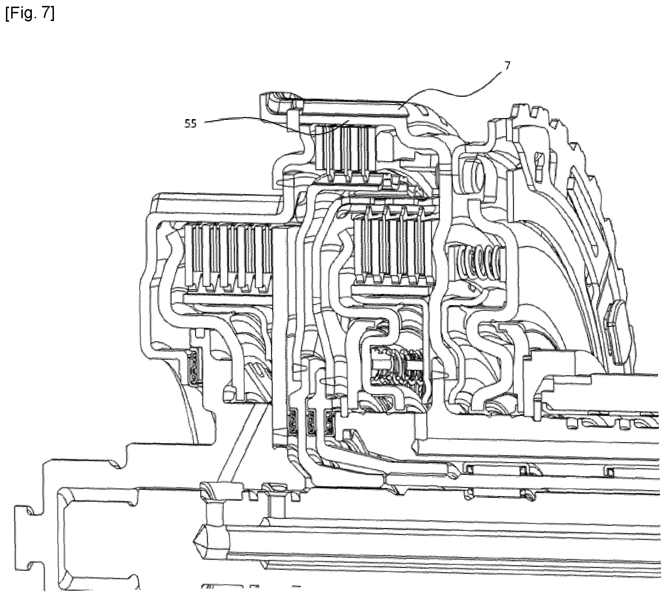

La figure 7 représente un ensemble de transmission de couple selon une seconde forme de réalisation de l'invention.

Dans cette forme de réalisation, la seule différence avec la première forme réside dans la présence des cannelures 7 du double embrayage 2 disposées directement sur le porte-disque d'entrée 55 de l'embrayage.

La forme de la pièce de liaison 56 est également modifiée. En l'occurrence, l'extension axiale 56a n'est plus nécessaire car la pièce de liaison 56 ne sert plus à passer le couple, le couple passant directement depuis le porte-disque d'entrée 55 au rotor 1 ou inversement.

Pour plus d'informations concernant le mode de fonctionnement de l'élément de rattrapage de jeu et l'élément de verrouillage, il est possible de se reporterau brevet FR2995959.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Ensemble de transmission de couple, en particulier pour véhicule automobile, comprenant
- un rotor (1) de machine électrique comportant des cannelures (3),
- un embrayage (2) comportant un porte-disque (55) et des cannelures complémentaires (7), les cannelures (3) dudit rotor (1) étant engagées avec jeu dans les cannelures complémentaires dudit embrayage (2),
- un élément de rattrapage de jeu (8) monté déplaçable sur l'embrayage (2) entre une première position dans laquelle il n'exerce aucune contrainte sur le rotor (1) et une seconde position dans laquelle il contraint les cannelures (3) du rotor (1) contre les cannelures (7) de l'embrayage (2),
- des moyens élastiques de rappel (14) sollicitant l'élément de rattrapage de jeu (8) vers sa seconde position, et
- un élément de verrouillage (23) comportant des moyens de verrouillage (23a) mobiles entre une position de verrouillage, dans laquelle ils immobilisent l'élément de rattrapage de jeu (8) dans sa première position, et une position de déverrouillage dans laquelle ils libèrent l'élément de rattrapage de jeu (8) qui peut alors se déplacer vers sa seconde position, les moyens de verrouillage (23a) étant aptes à être déplacés vers leur position de déverrouillage par rotation relative du rotor (1) par rapport à l'embrayage (2) dans un cas d'entraînement du rotor (1) par l'embrayage (2).

2. Ensemble de transmission de couple selon la revendication 1, **caractérisé en ce que** les cannelures (3) dudit embrayage (2) sont disposées directement sur le porte-disque (55) de l'embrayage (2).

3. Ensemble de transmission de couple selon la revendication 1, **caractérisé en ce que** les cannelures (3) dudit embrayage (2) sont disposées sur une pièce de liaison (56) solidaire en rotation du porte-disque (55).

4. Ensemble de transmission de couple selon l'une des revendications précédentes, **caractérisé en ce que** l'élément de rattrapage de jeu (8) comporte sur sa circonférence extérieure des dents (12) aptes à venir en appui contre les cannelures (3) du rotor (1) dans la seconde position de l'élément de rattrapage de jeu (8) ou en cas d'entrainement du rotor (1) par l'embrayage (2).

5. Ensemble de transmission de couple selon l'une des revendications précédentes, **caractérisé en ce que** ledit embrayage (2) est un double embrayage ou un embrayage de séparation apte à découpler ledit ensemble d'un moteur thermique.

6. Ensemble de transmission de couple selon l'une des revendications précédentes, **caractérisé en ce que** ledit embrayage (2) est un embrayage de type humide.

7. Ensemble de transmission de couple selon l'une des revendications précédentes, **caractérisé en ce que** l'élément de verrouillage (23) est monté sur l'embrayage (2) par l'intermédiaire d'au moins un rivet (10) engagé dans une ouverture oblongue (25) de l'élément de verrouillage (23), l'appui du rivet (10) sur l'une (25b) des extrémités (25a, 25b) de ladite ouverture (25) formant la butée permettant de limiter la rotation de l'élément de verrouillage (23) dans le sens rétro (R).

8. Ensemble de transmission de couple selon la revendication précédente, **caractérisé en ce que** ledit rivet (10) sert également au montage de l'élément de rattrapage de jeu (8) sur l'embrayage (2).

9. Ensemble de transmission de couple selon l'une des revendications précédentes, **caractérisé en ce que** l'élément de verrouillage (23) est distinct de l'élément de rattrapage de jeu (8) et mobile par rapport à celui-ci, les moyens élastiques de rappel (14) étant montés entre l'élément de verrouillage (23) et l'élément de rattrapage de jeu (8), le déverrouillage de l'élément de verrouillage (23) étant obtenu par déplacement relatif entre l'élément de verrouillage (23) et l'élément de rattrapage de jeu (8).

10. Ensemble de transmission de couple selon l'une des revendications précédentes, **caractérisé en ce que** l'élément de verrouillage (23) comporte au moins une languette élastique (29) dont l'extrémité libre (30) est apte à venir en appui contre une butée (21, 22) de l'organe de rattrapage de jeu (8) dans la position de verrouillage, ladite languette (29) étant dégagée élastiquement de ladite butée (21, 22) dans la position de déverrouillage de manière à autoriser le déplacement de l'élément de rattrapage de jeu (8) sous l'effet des moyens élastiques de rappel (14).

11. Système d'effort de pré-charge apte à venir en appui contre les cannelures (3) d'un rotor (1), ledit système étant solidaire d'un embrayage (2) comportant des cannelures complémentaires (7), les cannelures (3) dudit rotor (1) étant engagées avecjeu dans les cannelures complémentaires (7) dudit embrayage (2), ledit système comprenant :
- un élément de rattrapage de jeu (8) monté déplaçable sur l'embrayage (2) entre une première position dans laquelle il n'exerce aucune contrainte sur le rotor (1) et une seconde position dans laquelle il contraint les cannelures (3) du rotor (1) contre les cannelures (7) de l'embrayage (2),
- des moyens élastiques de rappel (14) sollicitant l'élément de rattrapage de jeu (8) vers sa seconde position, et
- un élément de verrouillage (23) comportant des moyens de verrouillage (23a) mobiles entre une position de verrouillage, dans laquelle ils immobilisent l'élément de rattrapage de jeu (8) dans sa première position, et une position de déverrouillage dans laquelle ils libèrent l'élément de rattrapage de jeu (8) qui peut alors se déplacer vers sa seconde position, les moyens de verrouillage (23a) étant aptes à être déplacés vers leur position de déverrouillage par rotation relative du rotor (1) par rapport à l'embrayage (2) dans un cas d'entraînement du rotor (1) par l'embrayage (2),
l'élément de rattrapage de jeu (8) comportant sur sa circonférence extérieure des dents (12) aptes à venir en appui contre les cannelures (3) du rotor (1) dans la seconde position de l'élément de rattrapage de jeu (8) ou en cas d'entrainement du rotor (1) par l'embrayage (2).
